# EUROPÄISCHE PATENTSCHRIFT

(11) **EP 4 193 453 B1**
(45) Veröffentlichungstag und Bekanntmachung des Hinweises auf die Patenterteilung: **26.08.2026**
(21) Anmeldenummer: 21739939.3
(22) Anmeldetag: 16.06.2021
(51) Int. Cl.: H02K 15/04

(54) **WICKLUNGSMATTE FÜR EINE ELEKTRISCHE MASCHINE**
WINDING MAT FOR AN ELECTRIC MACHINE
MAT D'ENROULEMENT POUR UNE MACHINE ÉLECTRIQUE

(30) Priorität: 07.08.2020 DE 102020120846
(43) Veröffentlichungstag der Anmeldung: 14.06.2023
(73) Patentinhaber: Schaeffler Technologies AG & Co. KG, 91074 Herzogenaurach (DE)
(72) Erfinder: MORGEN, Christian, 76532 Haueneberstein (DE); KUHL, Dennis, 77815 Bühl (DE); LEPOLD, Alexander, 73728 Esslingen am Neckar (DE)
(74) Vertreter: Schaeffler Technologies
(86) Internationale Anmeldenummer: PCT/DE2021/100512
(87) Internationale Veröffentlichungsnummer: WO 2022/028637

(56) Entgegenhaltungen:
- US-A1- 2018 287 445
- US-A1- 2020 052 537
- US-A1- 2020 052 562

## Beschreibung

Die Erfindung betrifft einen Stator einer dynamoelektrischen Maschine mit einem Statorkörper mit Statornuten und mindestens einer in den Statornuten angeordneten Wicklungsmatte. Ferner betrifft die Erfindung ein Verfahren zur Herstellung einer Wicklungsmatte für einen derartigen Stator.

Es ist bekannt, derartige Wicklungsmatten als sogenannte Wellenwicklung auszubilden. Eine derartige Wellenwicklung umfasst mehrere Wellenwicklungsleiter, bei denen jeweils in den Nuten des Stators verlaufende Nutabschnitte mit im Bereich der Wickelköpfe angeordneten Kopfabschnitten verbunden werden. Bei einer Radialflussmaschine mit in axialer Richtung des Stators verlaufenden Nuten befinden sich bei jedem Wellenwicklungsleiter diese Nutabschnitte in Umfangsrichtung betrachtet alternierend auf beiden Stirnseiten des Statorträgers. Unter einem Statorträger wird in diesem Zusammenhang der nicht elektromagnetisch aktive Teil des Stators verstanden, also beispielsweise ein Statorkörper ohne die felderzeugenden Spulen. Ein Statorkörper kann insbesondere als Statorblechpaket ausgebildet sein, dass aus übereinanderliegenden und voneinander elektrisch isolierten Statorblechen ausgebildet ist.

Aus US 6,894,414 B1 ist eine dynamoelektrische Maschine bekannt, bei der der Stator als sogenannte abgerollte Zahnkette gefertigt ist. In die Statornuten einer derartigen flach ausgebildeten Zahnkette wird zunächst eine Wicklungsmatte eingelegt, die eine verteilte Wicklung bildet. Die Ausdehnung der Wicklungsmatte in Wickelrichtung entspricht der Ausdehnung der flach ausgebreiteten Zahnkette und somit dem Umfang des resultierenden zylindrischen Stators. Nach dem Einlegen der Wicklungsmatte wird die Zahnkette in eine zylindrische Form gebogen. Die Enden der Zahnkette werden im Anschluss miteinander verschweißt.

Aus EP 259 77 54 A1 ist eine dynamoelektrische Maschine mit einer Wellenwicklung bekannt, bei der der Abstand zweier über einen Kopfabschnitt miteinander verbundener Nutabschnitte zumindest teilweise variiert.

Aus US 2020/0052537 A1 ist Verfahren bekannt, bei dem ein erster und ein zweiter Wellenwicklungsleiter bereitgestellt werden, ein erster Abschnitts des ersten Wellenwicklungsleiters an einer ausgewählten Stelle gebogen wird, der zweite Wellenwicklungsleiter auf einen zweiten Abschnitt des ersten Wellenwicklungsleiters aufgelegt wird und der erste Abschnitt des ersten Wellenwicklungsleiters derart rückgebogen wird, dass ein erster Teilabschnitt des zweiten Wellenwicklungsleiters unter dem ersten Abschnitt des ersten Wellenwicklungsleiters liegt und ein zweiter Teilabschnitt des zweiten Wellenwicklungsleiters auf dem zweiten Abschnitt des ersten Wellenwicklungsleiters liegt, wodurch ein erstes Leiterpaar gebildet wird. Wellenwicklungsleiter vollziehen in ihrer Ausdehnung in Wickelrichtung einen Lagenwechsel in den Statornuten. Dieser Lagenwechsel ist gegenüber der Mitte der Ausdehnung der Wellenwicklung verschoben. Das Dokument offenbart nicht, dass jeder Wellenwicklungsleiter in der Mitte seiner Ausdehnung in Wickelrichtung einen Lagenwechsel um genau eine Radialposition in den Statornuten vollzieht.

Der Erfindung liegt die Aufgabe zu Grunde, einen einfach zu fertigenden Stator für eine dynamoelektrische Maschine mit kontinuierlichem Wicklungsschema anzugeben. Diese Aufgabe wird durch einen Stator für eine dynamoelektrische Maschine mit den Merkmalen gemäß Patentanspruch 1 gelöst. Ferner wird die Aufgabe durch ein Verfahren zur Herstellung einer Wicklungsmatte für einen Stator einer dynamoelektrischen Maschine gemäß Patentanspruch 13 gelöst.

Vorteilhafte Ausführungsformen der Erfindung sind den abhängigen Patentansprüchen zu entnehmen.

Der Stator kann zunächst insbesondere axial ausgerichtete Statornuten umfassen.

Die Statornuten können aber auch eine Schrägung aufweisen, um Drehmomentwelligkeiten und Nutrastmomente zu reduzieren. In den Statornuten ist mindestens eine Wicklungsmatte angeordnet. Diese Wicklungsmatte ist als verteilte Wicklung ausgebildet. Sie enthält für jeden Strang der Maschine zwei Sätze durchgängiger Wellenwicklungsleiter. Jeder Wellenwicklungsleiter umfasst Nutabschnitte, die in unterschiedlichen Radialpositionen innerhalb der Statornuten angeordnet werden können. Darüber hinaus umfasst jeder Wellenwicklungsleiter Kopfabschnitte, die jeweils zwei Nutabschnitte außerhalb der Statornuten im Bereich der Wickelköpfe miteinander verbinden. Bei einer sogenannten Wellenwicklung sind diese Kopfabschnitte bei jedem Wellenwicklungsleiter alternierend an den beiden stirnseitigen Enden des Stators angeordnet.

Bei einer elektrischen Maschine mit Wellenwicklung sind häufig parallele Wicklungszweige pro Phase notwendig, da vor allem bei einer Wellenwicklung eine geringere Leiterhöhe (insbesondere im Vergleich zu sogenannten Hairpin-Wicklungen) genutzt wird und somit die Leiteranzahl in der Nut erhöht wird. Um die induzierte Phasenspannung zu begrenzen, werden mehrere Wicklungszweige parallelgeschaltet.

Die sogenannte Lochzahl q definiert die Nutenzahl pro Pol und Strang der dynamoelektrischen Maschine. Jeder Satz kann q durchgängige Wellenwicklungsleiter aufweisen, deren Nutabschnitte auf jeweils einen Nutblock von q nebeneinanderliegenden Statornuten pro Pol verteilt sind. Somit können die Wellenwicklungsleiter eines Strangs sowohl innerhalb eines Nutblocks verschiedene Nuten besetzen als auch innerhalb einer Nut unterschiedliche Positionen in radialer Richtung einnehmen, da in den Statornuten erfindungsgemäß mehrere Leiter übereinander angeordnet sind.

Um nun bei einer Parallelschaltung von Wellenwicklungsleitern eines bestimmten Stranges die Ausbildung von Kreisströmen zu verhindern, kann die Reihenfolge der Nutabschnitte der verschiedenen Wellenwicklungsleiter eines Satzes zwischen den Nutblöcken derart vertauscht werden, dass jeder Wicklungsleiter jede der q möglichen umfangsseitigen Positionen in einem Nutblock gleich oft einnimmt. Darüber hinaus wird vorgesehen, dass jeder Wellenwicklungsleiter in der Mitte seiner Ausdehnung in Wickelrichtung einen Lagenwechsel um genau eine Radialposition in den Statornuten vollzieht.

Resultat dieser beiden Maßnahmen ist, dass jeder Wellenwicklungsleiter jede mögliche Radiallage in Kombination mit jeder möglichen Position innerhalb des Nutblockes mindestens einmal und gleich häufig einnimmt. Die möglichen Kombinationen aus umfangsseitiger Position innerhalb eines Nutblockes und Radiallage sind hierbei gleichmäßig unter den Wellenwicklungsleitern verteilt. Auf diese Art und Weise werden Kreisströme bei Parallelschaltung der Wicklungsleiter effektiv vermieden. Dies gilt auch, wenn der Stator mit mehreren Wicklungsmatten dieses Aufbaus gestaltet wird, um beispielsweise die Anzahl der Parallelschaltungen zu erhöhen. Jede gleichwertige Radiallagen-Nut-Kombination wird in jeder Wicklungsmatte in dieser Ausführungsform belegt. Durch das fortlaufende Vertauschen der Leiterreihenfolge eines Stranges im Wickelkopf und durch den Radiallagenwechsel in der Mitte der Ausdehnung und damit insbesondere nach p Polen des Wellenwicklungsleiters in Wickelrichtung wird diese Regel für jeden Leiter jedes Stranges erfüllt. p bezeichnet hierbei die Polpaarzahl des Stators.

Der Statorkörper kann eine zu einer Zylinderform gebogene Zahnkette aufweisen mit mindestens einer axial verlaufende Fügestelle, an der die Enden der gebogenen Zahnkette miteinander verbunden sind. Eine derartige Ausgestaltung hat den Vorteil, dass die Statornuten im abgerollten Zustand der Zahnkette sehr einfach mit einer Wicklungsmatte bestückt werden können. Im Vergleich hierzu kann das Einbringen einer Wicklungsmatte in einen zylindrisch ausgebildeten Statorkörper einen komplexen Vorgang darstellen.

Insbesondere bei einer Ausbildung des Statorkörperes als Zahnkette ist es besonders vorteilhaft, wenn die Ausdehnung der Wicklungsmatte in Wickelrichtung dem Innenumfang des Stators entspricht.

Die Polpaarzahl p des Stators kann ein ganzzahliges Vielfaches von q betragen. Beträgt die Polpaarzahl p ein Mehrfaches von der Lochzahl q, wird jede mögliche Position innerhalb eines Nutblock in jeder der zwei möglichen Radialpositionen innerhalb der Statornuten mehrfach von einem Wellenwicklungsleiter eines Satzes eingenommen.

Die Wellenwicklungsleiter eines Satzes können in einem linear ausgebreiteten Zustand eine Achsensymmetrie bezüglich eines Kreuzungsschemas der Kopfanschnitte aufweisen mit einer Symmetrieachse, die parallel zu einem Nutabschnitt ausgerichtet ist. Auf diese Art und Weise ist sichergestellt, dass jede Nutposition innerhalb eines Nutblockes in jeder der beiden Radiallagen von einem Wellenwicklungsleiter eines Satzes mindestens einmal eingenommen wird und die Besetzung dieser Positionen bzw. Radiallagen unter den verschiedenen Wellenwicklungsleitern eines Satzes gleichverteilt ist.

Der Stator umfasst eine erste Teilwicklungsmatte, die für jeden Strang genau einen ersten Satz von Wellenwicklungsleitern umfasst, wobei besagte erste Sätze im Bereich des Lagenwechsels X-förmig ineinandergefügt sind, so dass an Kreuzungspunkten der Wellenwicklungsleiter eines ersten und zweiten Stranges auf der einen Seite des Lagenwechsels stets die Wellenwicklungsleiter des ersten Stranges über denen des zweiten Stranges liegen und auf der anderen Seite stets die Wellenwicklungsleiter des zweiten Stranges über denen des ersten Stranges liegen. Hierdurch lassen sich die Sätze von Wellenwicklungsleitern der verschiedenen Stränge sehr einfach vorkonfigurieren und anschließend zur ersten Teilwicklungsmatte fügen.

Ähnlich kann mit einer zweiten Teilwicklungsmatte vorgegangen werden. D. h., dass der Stator eine zweite Teilwicklungsmatte aufweist, die für jeden Strang genau einen zweiten Satz von Wellenwicklungsleitern umfasst, wobei besagte zweite Sätze im Bereich des Lagenwechsels X-förmig ineinandergefügt sind, so dass an Kreuzungspunkte der Wellenwicklungsleiter eines ersten und zweiten Stranges auf der einen Seite des Lagenwechsels stets die Wellenwicklungsleiter des ersten Stranges über denen des zweiten Stranges liegen und auf der anderen Seite stets die Wellenwicklungsleiter des zweiten Stranges über denen des ersten Stranges liegen.

Aus der ersten und zweiten Teilwicklungsmatte kann nun eine vollständige Wicklungsmatte gebildet werden. Hierbei kann nun die zweite Teilwicklungsmatte gegenüber der ersten Teilwicklungsmatte in einem linear abgerollten Zustand um 180 Grad um eine in Wickelrichtung ausgerichtete Achse gedreht sein. Die Teilwicklungsmatten können X-förmig im Bereich des Lagenwechsels ineinandergefügt sein, so dass die Wellenwicklungsleiter der ersten Teilwicklungsmatte auf der einen Seite des Lagenwechsels stets über den Wellenwicklungseiter der zweiten Teilwicklungsmatte liegen und auf der anderen Seite des Lagenwechsels stets unterhalb der Wellenwicklungsleiter der zweiten Teilwicklungsmatte liegen.

Hierbei entstehen besonders kompakte Wickelköpfe, wenn zumindest Bereiche der Kopfabschnitte jedes Wellenwicklungsleiters auf der einen Seite jenseits des Lagenwechsels in Richtung der Nutöffnung gegenüber den jeweils verbundenen Nutabschnitten versetzt verlaufen und auf der anderen Seite jenseits des Lagenwechsels in Richtung des Nutgrundes gegenüber den jeweils verbundenen Nutabschnitten versetzt verlaufen.

Der maximale Versatz der Kopfabschnitte kann jeweils dem Betrage nach einer halben Radialposition entsprechen und damit der Hälfte der Leiterausdehnung in radialer Richtung betrachtet.

Wenn die erste und die zweite Teilwicklungsmatte ineinandergesteckt werden, wird durch den Versatz der Kopfabschnitte eine besonders kompakte Bauform erzielt. Der Versatz der ersten Teilwicklungsmatte ist stets dem Versatz der zweiten Teilwicklungsmatte entgegengerichtet. Diese Verhältnisse kehren sich in Wicklungsrichtung betrachtet am Lagenwechsel um.

Eine Dynamoelektrische Maschine mit einem Stator nach einer der vorstehend beschriebenen Ausführungsformen eignet sich insbesondere als Traktionsantrieb für ein Elektro- oder Hybridfahrzeug. Sie ist einfach zu fertigen und somit für große Stückzahlen geeignet. Ihr elektromagnetisches Verhalten ist durch das Eliminieren von Kreisströmen äußerst vorteilthaft.

Darüber hinaus ist der Gegenstand der Erfindung ein Verfahren zur Herstellung einer Wicklungsmatte für einen Stators einer dynamoelektrischen Maschine. Bei dem Verfahren wird zunächst eine erste Teilwicklungsmatte erzeugt. Hierfür wird in einem ersten Schritt für jeden Strang des Stators ein erster Satz von q Wellenwicklungsleitern bereitgestellt. Diese Wellenwicklungsleiter umfassen jeweils Nutabschnitte, die in Statornuten eines Statorkörpers der dynamoelektrischen Maschine anzuordnen sind, und Kopfabschnitte, die jeweils zwei Nutabschnitte eines Wellenwicklungsleiters im Bereich der Wickelköpfe der Maschine miteinander verbinden. Dabei vollzieht jeder Wellenwicklungsleiter in der Mitte seiner Ausdehnung in Wickelrichtung einen Lagenwechsel um genau eine Radialposition in den Statornuten.

Die q Wellenwicklungsleiter werden hierbei derart angeordnet, dass jeweils q benachbarte Nutabschnitte der jeweiligen Wellenwicklungsleiter im Abstand zweier Statornuten aufeinander folgen. Vorteilhaft ist hierbei, wenn die Reihenfolge der Nutabschnitte der verschiedenen Wellenwicklungsleiter innerhalb eines Satzes vertauscht wird, sodass jeder Wellenwicklungsleiter jede der q möglichen Positionen innerhalb eines Nutblockes gleich oft einnimmt. Wenn beispielsweise ein Nutblock vier mögliche Positionen umfasst, die Lochzahl des Stators somit vier beträgt, so können die Nutabschnitte der an dem Satz beteiligten Wellenwicklungsleiter über die Positionen 1,2, 3 und 4 gleich verteilt sein.

Im Anschluss werden alle so gebildeten ersten Sätze von Wellenwicklungsleitern zur ersten Teilwicklungsmatte zusammengesetzt bzw. ineinandergefügt.

Eine zweite Teilwicklungsmatte kann in gleicher Weise wie die erste Teilwicklungsmatte erzeugt werden.

Die so entstandenen zwei Teilwicklungsmatten können schließlich ineinandergefügt werden. Bei dem Ineinanderfügen der Teilwicklungsmatten vollziehen die Nutabschnitte der beteiligten Wellenwicklungsleiter einen Lagenwechsel. Dies geschieht derart, dass die Wellenwicklungsleiter der ersten Teilwicklungsmatte vor dem Lagenwechsel unter und hinter dem Lagenwechsel über den Wellenwicklungsleitern der zweiten Teilwicklungsmatte angeordnet sind. Nach dem Ineinanderfügen der Teilwicklungsmatten liegen mithin Nutabschnitte der Wellenwicklungsleiter der ersten Teilwicklungsmatte über Nutabschnitten der Wellenwicklungsleiter der zweiten Teilwicklungsmatte auf einer Seite des Lagenwechsels, während die Verhältnisse auf der anderen Seite des Lagenwechsels genau umgekehrt sind. Bei einer späteren Anordnung der so entstehenden Wicklungsmatte in einem Statorkörper der dynamoelektrischen Maschine werden somit durch die Wicklungsmatte bereits zwei Radialpositionen besetzt, wobei jeder Wellenwicklungsleiter jede der beiden Radialpositionen in jeder der q möglichen Positionen innerhalb eines Nutblocks gleich oft belegen kann.

Im Folgenden wir die Erfindung anhand der in den Figuren dargestellten Ausführungsbeispiele näher erläutert. Es zeigen:
- Figur 1:: eine schematische Darstellung eines ersten Satzes von Wellenwicklungsleitern,
- Figur 2:: eine konstruktive Realisierung des ersten Satzes von Wellenwicklungsleitern,
- Figur 3:: ein Ineinanderfügen von drei ersten Sätzen von Wellenwicklungsleitern,
- Figur 4:: eine erste Teilwicklungsmatte als Resultat der drei ineinandergefügten ersten Sätze von Wellenwicklungsleitern,
- Figur 5:: ein Ineinanderfügen zweier Teilwicklungsmatten zu einer Wicklungsmatte,
- Figur 6:: ein Stapel aus mehreren Wicklungsmatten,
- Figur 7:: einen Statorkörper mit einem in Statornuten des Statorkörpers eingelegten Wicklungsstapel,
- Figur 8:: ein erster Verschaltungsplan für eine Wicklung gemäß einer Ausführungsform der Erfindung,
- Figur 9:: ein zweiter Verschaltungsplan für eine Wicklung gemäß einer Ausführungsform der Erfindung,
- Figur 10:: eine erste Ausführung einer Zahnkette zur Bildung eines zylindrischen Statorkörpers,
- Figur 11:: eine zweite Ausführung einer Zahnkette zur Bildung eines zylindrischen Statorkörpers,
- Figur 12:: eine dritte Ausführung einer Zahnkette zur Bildung eines zylindrischen Statorkörpers,
- Figur 13:: eine vierte Ausführung einer Zahnkette zur Bildung eines zylindrischen Statorkörpers,
- Figur 14:: eine fünfte Ausführung einer Zahnkette zur Bildung eines zylindrischen Statorkörpers und
- Figur 15:: eine sechste Ausführung einer Zahnkette zur Bildung eines zylindrischen Statorkörpers.

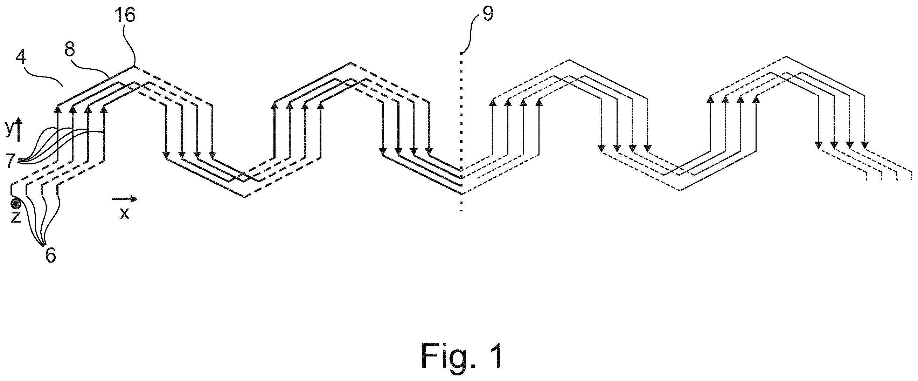

Figur 1 zeigt eine schematische Darstellung eines ersten Satzes 4 von Wellenwicklungsleitern gemäß einer Ausführungsform der Erfindung. Die Wellenwicklungsleiter 6 umfassen jeweils Nutabschnitte 7, die über Kopfabschnitte 8 miteinander verbunden sind. Die Kopfabschnitte 8 bilden, nachdem die Wellenwicklungsleiter 6 in Statornuten eines Statorkörpers einer dynamoelektrischen Maschine eingelegt wurden, die axial über den Statorkörper hinausragenden Wickelköpfe, während die Nutabschnitte 7 in Statornuten des Statorkörpers eingelegt sind.

Der dargestellte erste Satz 4 ist genau einem Strang der Maschine zugeordnet und umfasst vier Wellenwicklungsleiter 6. Diese vier Wellenwicklungsleiter 6 werden in einem Nutblock aus vier Nuten jeweils nebeneinander im Statorkörper angeordnet. Die sogenannte Lochzahl q des Stators, die Nutenzahl pro Pol und Strang, beträgt demnach q=4. Die Polpaarzahl des Stators, der den dargestellten Satz in seiner Statorwicklung umfasst, beträgt p=4.

Bei der Maschine handelt es sich um eine dreiphasige Maschine. Da ein Satz von Wellenwicklungsleitern 6 pro Nutblock vier Nuten belegt und jedem der acht Pole des Stators genau ein Nutblock zugeordnet ist, entfallen auf jeden Strang der Maschine 32 Statornuten. Somit ergibt sich für den Stator insgesamt bei seinen drei Phasen eine Nutenzahl von N=96.

Da jeder Nutblock vier Nuten umfasst, kann ein Nutabschnitt 7 eines Wellewicklungsleiters 6 in jedem Nutblock vier unterschiedliche Positionen einnehmen. Wie die schematische Darstellung des ersten Satzes 4 von Wellenwicklungsleitern 7 zeigt, wechselt jeder Wellenwicklungsleiter 7 von Nutblock zu Nutblock stets seine Position.

Es sei eine durchgängige Nummerierung der Positionen innerhalb der Nutblöcke von links nach rechts kontinuierlich aufsteigend von Position Eins bis Position Vier vorausgesetzt. Der Wellenwicklungsleiter 6 in Position Eins im ersten Nutblock von links befindet sich im darauffolgenden zweiten Nutblock in Position Vier. Im dritten Nutblock von links ist dieser Wellenwicklungsleiter 6 in Position Drei angeordnet. Im vierten Nutblock in Position Zwei. Im fünften Nutblock wechselt dieser Wellenwicklungsleiter 6 in Position Drei und wechselt im sechsten Nutblock wieder in die Position Zwei. Im siebten Nutblock ist der Wellenwicklungsleiter 6 wieder in der Postion Eins. Im achten Nutblock belegt er die Position Vier.

Das vom ersten Satz 4 Wellenwicklungsleitern 6 gebildete Schema weist eine Achsensymmetrie bezüglich einer Symmetrieachse 9 auf, die den ersten Satz 4 in Wicklungsrichtung betrachtet mittig in zwei gleich lange Hälften teilt. Diese Achsensymmetrie manifestiert sich in der Gestaltung der Wickelköpfe. An dem Pol, der sich genau über der Symmetrieachse 9 befindet, findet keine Kreuzung der Kopfabschnitte 8 statt. Das Kreuzungsschema der anderen Kopfabschnitte 8 ist achsensymmetrisch zur Symmetrieachse 9.

Eine analoge Besetzung der Nutpositionen erfolgt durch die weiteren, an dem ersten Satz 4 beteiligten Wellenwicklungsleiter 6. Die Wellenwicklungsleiter 6 folgen somit keinem konstanten Pitch. Vielmehr ändert sich der Abstand zweier Nutabschnitte 7 eines Wellenwicklungsleiters kontinuierlich.

In den im Wickelkopf angeordneten Kopfabschnitten 8 wird eine positive und eine negative zugehörige Kopfabschnitt-Leiterlage definiert. Diese ist jeweils um eine halbe Leiterhöhe in positiver bzw. in negativer z-Richtung versetzt. Die gestrichelte Leiterlinie in Figur 1 soll dabei einen Versatz in die zugehörige positive und die durchgezogene Linie einen Versatz in die zugehörige negative Kopfabschnitt-Leiterlage verdeutlichen.

Die Kopfabschnitte 8 links der Symmetrieachse 9 sind von links betrachtet zunächst in Richtung der negativen z-Achse orientiert. An einer Wickelkopfspitze 10 angekommen, kehrt sich die Orientierung um, so dass die über einen Kopfabschnitt 8 verbundenen Nutabschnitte 7 schließlich in derselben z-Achsenposition angeordnet sind. Nach einem Einbau der dargestellten Wellenwicklungsleiter 6 in dem Statorkörper bedeutet dies, dass diese Nutabschnitte 7 in der gleichen Radialposition angeordnet sind.

Im Bereich rechts der Symmetrieachse 9 verhält sich der Verlauf der Kopfabschnitte 8 genau umgekehrt. D.h., von links nach rechts betrachtet verläuft ein Kopfabschnitt 8 bis zur Wickelkopfspitze 10 zunächst in positiver z-Richtung und nach der Wickelkopfspitze in negativer z-Richtung, so dass die über besagten Kopfabschnitt 8 verbundenen Nutabschnitte 7 auch hier wieder in derselben z-Position und somit im eingebauten Zustand in derselben Radialposition liegen.

An der Symmetrieachse 9 und somit in der Mitte des ersten Satzes 4 von Wellenwicklungsleitern 6 eines Stranges der Maschine findet ein Lagenwechsel in z-Richtung statt. An beiden Seiten der hier angeordneten Wickelkopfspitze 10 verlaufen die Kopfabschnitte 8 in negativer z-Richtung. Auch hier beträgt der Versatz jeweils auf der linken und rechten Seite der Wickelkopfspitze 10 dem Betrage nach jeweils einer halben Leiterbreite in Radialrichtung betrachtet. Aufgrund der gleichen Orientierung dieses Versatzes in z-Richtung hat dies jedoch eine Lagenversatz der über den Kopfabschnitt 8 verbundenen Nutabschnitte 7 um genau eine Leiterbreite zur Folge. Demnach sind die Nutabschnitte 7 auf der rechten Seite der Symmetrieachse in den Nuten der Maschine um eine Radiallage näher in Richtung des Nutgrundes platziert als die Nutabschnitte 7 links der Symmetrieachse 9.

Im Ergebnis führt die dargestellte Verteilung der Nutabschnitte 7 innerhalb des ersten Satzes 4 hinsichtlich der möglichen Positionen innerhalb der beteiligten Nutblöcke und hinsichtlich der von den Wellenwicklungsleitern 8 eingenommenen Radiallagen dazu, dass jeder Wellenwicklungsleiter 8 jede mögliche Position im Nutblock und jede mögliche Radiallage gleich oft belegt. Hiermit ist bereits innerhalb eines Satzes von Wellenwicklungsleitern 8 die Grundlage dafür geschaffen, dass bei einer konsequenten Fortsetzung dieses Schemas für alle an der Wicklungsmatte des Stators beteiligten Sätze von Wellenwicklungsleitern eine Ausbildung von Kreisströmen trotz parallel geschalteter Leiterschleifen verhindert werden kann.

Wichtig für das Verständnis ist, dass die positive Kopfabschnitt-Leiterlage der ersten Teilmatten-Leiterlage der negativen Wickelkopf-Leiterlage der in positiver z- Richtung versetzten zweiten Teilmatten-Leiterlage entspricht. Entlang der Wellenrichtung eines Strangs in gemäß Fig. 1 positiver x-Richtung erfolgt in der ersten Teilmatten- Leiterlage nach Nutaustritt ein Versatz in die zugehörige negative Wickelkopf-Leiterlage. In der zweiten Leiterlage liegt dahingegen nach Nutaustritt ein Versatz in die zugehörige positive Wickelkopf-Leiterlage vor. Dieser Unterschied wird bedingt durch den Lagenwechsel. Entlang der beschriebenen positiven Wellenrichtung erfolgt nach Nutaustritt beim Lagenwechsel zunächst ein Leiterversatz in die zur ersten Teilmatten-Leiterlage zugehörige negative Wickelkopf-Leiterlage. In der Wickelkopf-Spitze wechseln die Leiter in die zu ersten Teilmatten-Leiterlage positive Wickelkopf-Leiterlage. Bei dem folgenden Nuteintritt liegt demnach ein Versatz in positiver z-Richtung in die zweite Teilmatten-Leiterlage vor. Bei einer konstruktiven Ausgestaltung des Wickelkopfes zeigt sich, dass auch bei den entlang der positiven Wellenrichtung folgenden Nuteintritten in der zweiten Teilmatten-Leiterlage ein Versatz in positiver z-Richtung bestehen muss. Daher muss bei den Nutaustritten wie oben beschrieben ein Versatz in positiver Richtung erfolgen.

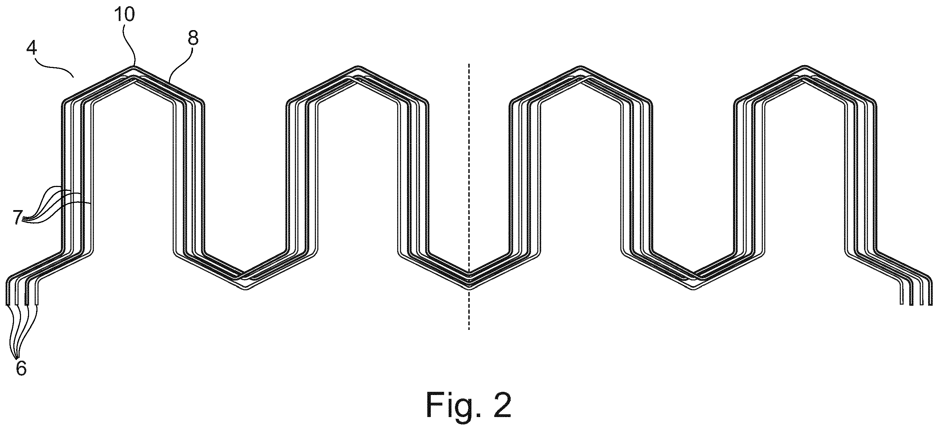

Figur 2 zeigt eine konstruktive Realisierung des ersten Satzes 4 von Wellenwicklungsleitern 6.

Die Leiter sind in der Wickelkopfspitze 10 über die kurze Kante gebogen. Die q parallelen Leiter eines Strangs können dabei getrennt voneinander vorgefertigt werden. So ist es möglich, die Leiter zunächst in der x-y-Ebene zu biegen und in einem zweiten Schritt mit Hilfe eines Stempels die notwendigen Leiterversätze im Wickelkopf einzuprägen. Nach welcher Reihenfolge diese Leiter ineinander zu stecken sind, ist für jedes Wickelschema mit unterschiedlichen Kenngrößen unterschiedlich und muss jeweils getrennt untersucht werden.

Anhand Figur 2 soll beispielhaft ein solcher Steckprozess diskutiert werden. Bei einer genaueren Betrachtung kann man erkennen, dass der in der linken Anschlusszone zweite Wellenwicklungsleiter 6 von links im ersten und im siebten Wickelkopfabschnitt entlang der positiven Wellenrichtung vor den übrigen Leitern angeordnet ist. Dahingegen ist der Leiter im dritten und im fünften Wickelkopfabschnitt hinter den übrigen Wellenwicklungsleitern 6 angeordnet. In den übrigen Wickelkopfabschnitten kreuzt dieser Leiter nicht die anderen Wellenwicklungsleiter 6, womit der Wellenwicklungsleiter 6 weder vor noch hinter einem anderen Wellenwicklungsleiter 6 angeordnet ist. Dieser Leiter muss somit als letztes in die bereits angeordneten Leiter des Strangs in positive y-Richtung gesteckt werden. Hierbei muss man die beschriebene Anordnung in den Wickelkopfabschnitten realisieren. Die übrigen Wellenwicklungsleiter 6 sind in den jeweiligen Wickelkopfabschnitten in der gleichen Reihenfolge untereinander angeordnet. So liegt der in der linken Anschlusszone zweite Leiter von rechts jederzeit vor dem in der linken Anschlusszone ersten Leiter von rechts. Ein Stecken der übrigen Leiter ist daher nicht notwendig. Somit können diese entsprechend ihrer Reihenfolge ineinandergelegt werden.

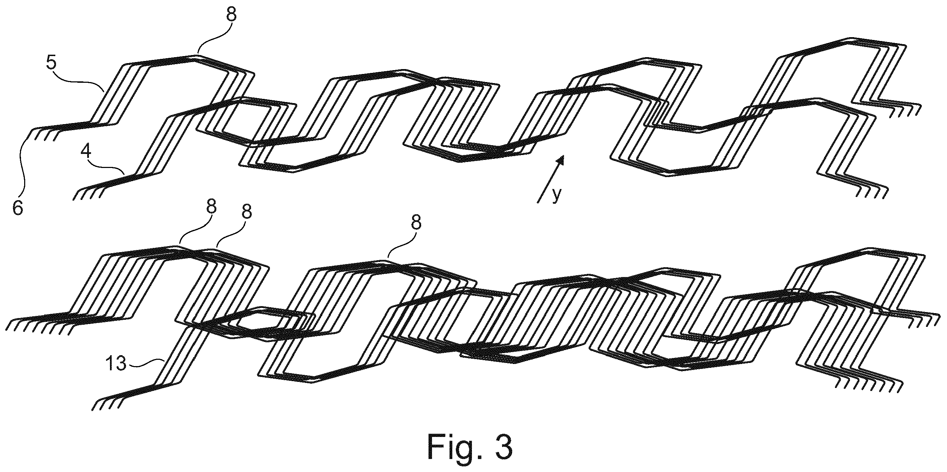

Figur 3 zeigt ein Ineinanderfügen von drei ersten Sätzen 4,5,13 von Wellenwicklungsleitern 6 zu einer ersten Teilwicklungsmatte, die demnach für jeden Strang der Maschine jeweils einen ersten Satz 4,5,13 Wellenwicklungsleiter 6 umfasst. Die dargestellten ersten Sätze 4,5,13 sind in gleicher Weise gefertigt worden, insbesondere in der im Zusammenhang mit Figur 2 beschrieben Art und Weise gesteckt worden.

Die Stränge bzw. die zugehörigen Sätze 4,5,13 von Wellenwicklungsleitern 6 müssen in der Folge zur ersten Teilmatte ineinandergefügt werden. Der im Folgenden beschriebene Ablauf ist identisch für jedes Wicklungsschema mit unterschiedlichen Kenngrößen. Das Fügen erfolgt mit Hilfe eines x-fömigen Steckens der einzelnen ersten Sätze 4,5,13 wie in Figur 3 schematisch verdeutlicht. Da die Anordnung der Kopfabschnitte 8 zwischen den jeweiligen Strängen links und rechts des Lagenwechsels unterschiedlich ist, müssen die einzelnen Stränge x-förmig in y-Richtung ineinandergeschoben und anschließend zueinander verdreht werden, wobei dieser Vorgang sequenziell erfolgen kann.

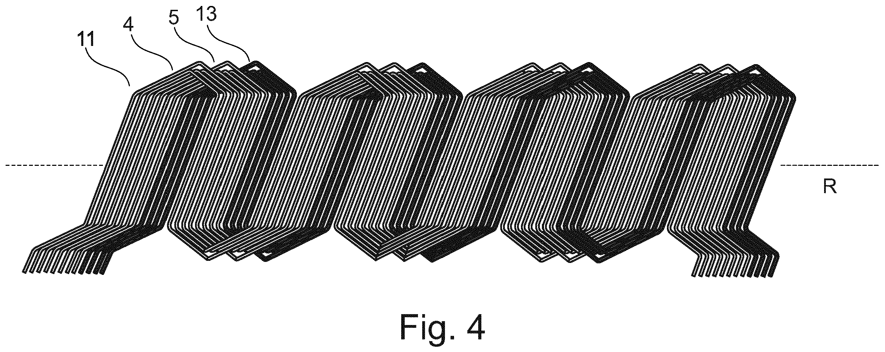

Nach diesem Prinzip wird zunächst der erste Satz des zweiten Stranges 5 in den ersten Satz des ersten Stranges 4 gefügt. Anschließend wird der erste Satz des dritten Stranges 13 in die bereits entstandene Teilmatte gesteckt und man erhält eine fertige erste Teilwicklungsmatte. Eine solche erste Teilwicklungsmatte 11 als Resultat der drei ineinandergefügten Sätze 4,5,13 von Wellenwicklungsleitern 6 zeigt Figur 4. Für eine alternative Anzahl von Strängen verläuft der sequenzielle Zusammenbau analog. Die unterschiedliche Anordnung der Kopfabschnitte 8 links und rechts des Lagenwechsels wird bedingt durch die unterschiedliche Ausgestaltung des Wickelkopfes in den beiden Abschnitten.

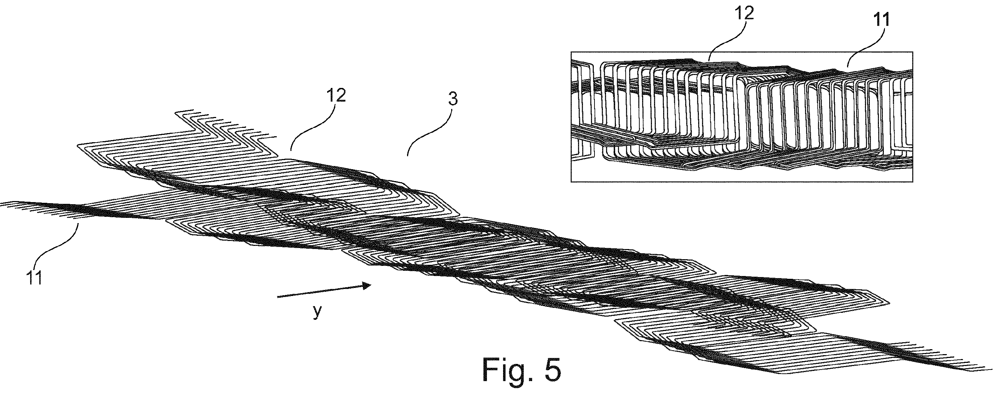

Im Anschluss wird eine zweite Teilwicklungsmatte 12 in vollkommen analoger Vorgehensweise hergestellt. Die erste und zweite Teilwicklungsmatte 11,12 werden schließlich zu eine Wicklungsmatte 3 zusammengefügt. Dieser Vorgang ist in Figur 5 verdeutlicht.

Wie oben beschrieben ist jede Teilwicklungsmatte 11,12 unterteilt in zwei Bereiche, in denen die Leiter in den unterschiedlichen Radiallagen liegen. Daher müssen beim Zusammenstecken die in der ersten Teilwicklungsmatte 11 nicht belegten Lagen-NutPositionen durch die zweite Teilwicklungsmatte 12 belegt werden. Rotiert man die in Figur 4 dargestellte erste Teilwicklungsmatte 11 entlang der R-Achse um 180 Grad, so kann bei einer konstruktiven Ausgestaltung gezeigt werden, dass die rotierte erste Teilwicklungsmatte 11 (hier als zweite Teilwicklungsmatte 12 bezeichnet) das Gegenstück zur ursprünglichen ersten Teilmatte 11 sowohl im Bereich der Nutabschnitte 7 als auch im Bereich der Kopfabschnitte 8 bildet. Mithin entspricht die zweite Teilwicklungsmatte 12 der entlang der R-Achse um 180 Grad gedrehten ersten Teilwicklungsmatte 11.

Demnach ist im Prozess nur eine Ausführung der Teilwicklungsmatte 11,12 notwendig, was den Aufwand der Fertigung erheblich reduziert. Analog zum Fügen der Sätze 4,5,13 der einzelnen Stränge müssen diese zwei entgegengesetzten Teilwicklungsmatten 11,12 in y-Richtung x-förmig ineinander verschoben und anschließend zueinander verdreht werden. Aus y-Richtung betrachtet kreuzen sich hierbei die zwei Teilwicklungsmatten 11,12 entlang des Lagenwechsels der Teilwicklungsmatten 11,12.

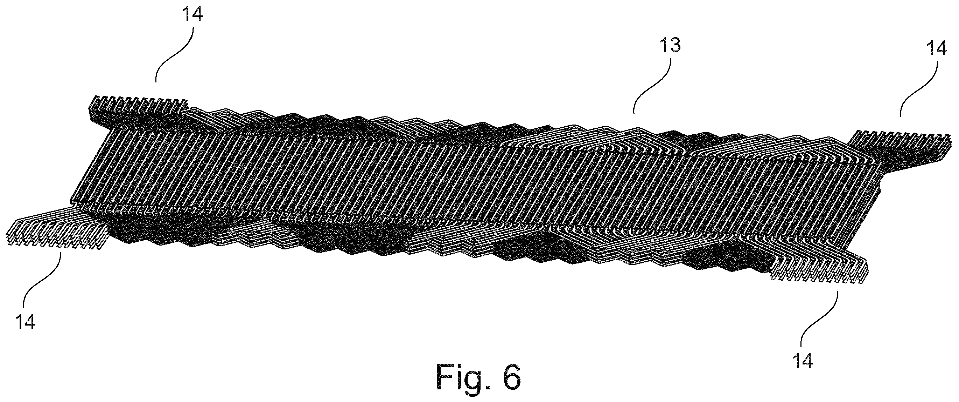

Figur 6 zeigt einen Wicklungsstapel 13 aus mehreren Wicklungsmatten 3. Es ergibt sich in der dargestellten Ausführungsform eine flache Wicklung mit zn = 8 Leiterlagen.

Da jede der aufeinandergestapelten Wicklungsmatten 3 zwei Leiterlagen enthält, sind vier Wicklungsmatten 3 hierzu gestapelt.

Die Wicklungsmatten 3 können direkt in den Statornuten eines Statorkörpers aufeinandergestapelt werden. Besonders einfach gelingt dies, wenn ein solcher Statorkörper, der beispielsweise in Form eines Statorblechpaketes gefertigt ist, als Zahnkette ausgebildet ist.

Die Anzahl der gestapelten Wicklungsmatten 3 ist flexibel wählbar. Aufgrund des Aufbaus aus Wicklungsmatten, die aus zwei Teilmatten 11,12 aufgebaut sind und demnach zwei Leiterlagen bilden, ist die Anzahl der Leitlagen des gesamten Wicklungsstapels 13 geradzahlig.

In Figur 6 ist zudem zu erkennen, dass auf beiden Stirnseiten an beiden Enden der des Wicklungsstapels 13 Anschlussleiter 14 aus dem Wicklungsstapel 13 hervorstehen. Sofern die Wicklung in eine Zahnkette eingelegt wird, müssen diese infolge des Zusammenrollens der Wicklung mit der Zahnkette miteinander verflochten werden.

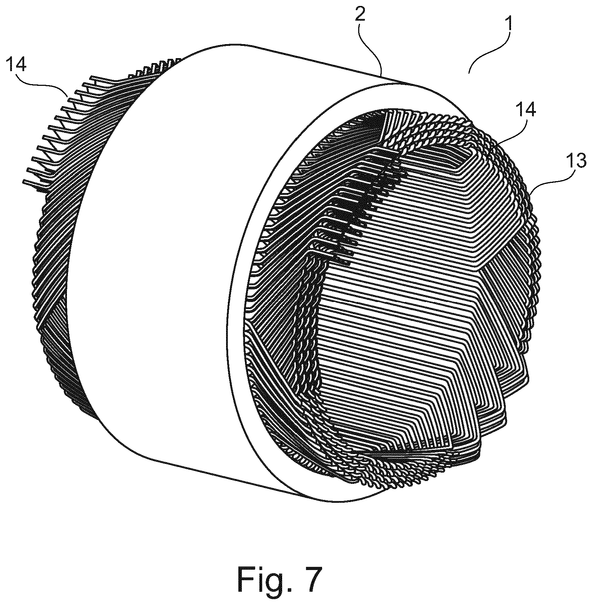

Figur 7 zeigt einen Statorkörper mit einer in Statornuten des Statorkörpers 2 eingelegten Wicklung. Dargestellt ist eine Wicklung mit Statorkörper 2 im zusammengerollten Zustand und mit verflochtenen Anschlussleitern 14. Schematisch ist hierbei eine Wicklung ohne Vertauschen der Leiterreihenfolge im Wickelkopf, jedoch mit den oben genannten Kenngrößen abgebildet.

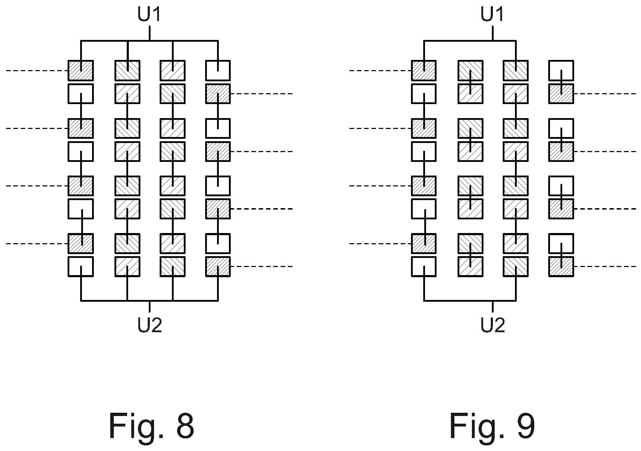

Figur 8 zeigt einen ersten Verschaltungsplan für einen Wicklungsstapel 13 gemäß einer Ausführungsform der Erfindung und Figur 9 einen zweiten Verschaltungsplan für einen Wicklungsstapel 13 gemäß einer Ausführungsform der Erfindung,

Die gestapelten und zusammengerollten Wicklungsmatten 3 müssen in der Folge miteinander verschaltet werden. Die Verschaltung erfolgt dabei auf beiden Stirnseiten analog. Darüber hinaus ist die Verschaltung für alle Stränge gleich ausgeführt, weshalb nachstehend diese nur anhand eines Strangs erläutert wird. Grundsätzlich lässt sich feststellen, dass pro Stirnseite die maximale Anzahl paralleler Wicklungszweige der Lochzahl q entspricht. Somit sind für den kompletten Wicklungsstapel 13 maximal a = 2q parallele Wicklungszweige je Strang möglich. Die Verschaltung muss für jede beliebige Lochzahl einzeln untersucht werden. Anhand einer Verschaltung mit q = 4 werden exemplarisch hierfür notwendige Überlegungen verdeutlicht. Nach dem Verflechten sind die Anschlussleiter 14 aus axialer Richtung gesehen in einer Matrix angeordnet. Dabei liegen die Anschlussleiter 14 der unterschiedlichen Enden einer Wicklungsmatte 3 immer übereinander in der matrixförmigen Anordnung, wobei bei Betrachtung einer Stirnseite hier nur eine Teilmatte 11,12 der Wicklungsmatte 3 verschaltet wird.

Figur 8 zeigt schematisch die Verschaltung für vier und Figur 9 für zwei parallele Zweige je Stirnseite. Die unterschiedlichen Schraffierungen sollen die verschiedenen Leiter des Wicklungsstapels 13 verdeutlichen. Zusätzlich ist für jede AnschlussleiterEbene in der Matrix die zugehörige transversale Abweichung im Wickelkopf dargestellt, welche sich, wie erwartet, fortlaufend abwechselt. Die Umkehrung der Leiteranordnung beim Lagenwechsel bewirkt, dass auch im Bereich der Anschlüsse die Leiteranordnung in beiden Anschlussleiterebenen einer Wicklungsmatte 3 umgekehrt ist. Für den Fall von vier parallelen Zweigen erfolgt die Anschlusskontaktierung in der obersten und in der untersten Anschlussleiterebene. Dazwischen sind die jeweils übereinanderliegenden Anschlüsse unterschiedlicher Wicklungsmatten 3 miteinander in Serie verschaltet. Dieses Verschaltungskonzept ist dabei beliebig auf andere Lochzahlen anwendbar, wobei die Anzahl paralleler Zweige je Stirnseite der Lochzahl entsprechen muss.

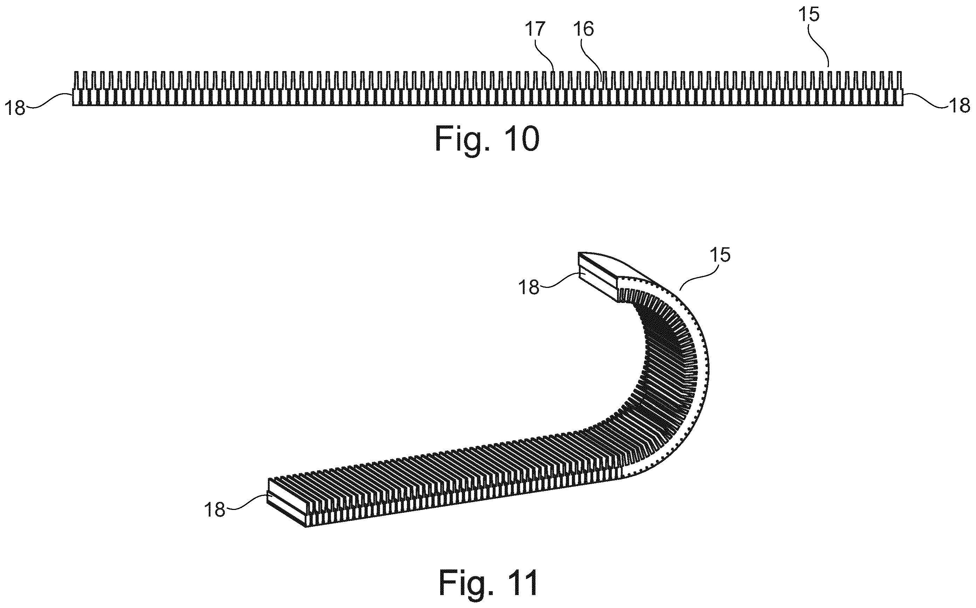

In den Figuren 10 bis 15 sind insgesamt sechs verschiedene Ausführungsformen eines Statorkörpers in Form einer sogenannten Zahnkette 15 dargestellt. Allen diesen Ausführungen gemeinsam ist, dass der Statorkörper zunächst umfangsseitig zwei axial orientierte Stirnflächen 18 aufweist, die nach einer Bestückung mit einem Wicklungsstapel 13 miteinander z. B. durch Schweißen verbunden werden, so dass der Statorkörper eine Zylinderform erhält.

**In** der ersten Ausführungsform nach Figur 10 sind innerhalb der Zahnkette auch die einzelnen Startorzähne 17 und Statornuten 16 mit Bezugszeichen versehen.

**In** der ersten Ausführungsform nach Figur 10 liegt die Zahnkette 15 in vollständig linear abgerollter Form vor, so dass die Bestückung mit dem Wicklungsstapel 13 ähnlich einfach handhabbar wie bei einem Linearmotor ermöglicht wird. Jeder einzelne Statorzahn 17 hat ein gewisses Winkelspiel, das bei allen Zähnen im Wesentlichen gleich ist. Dieses ist derart bemessen, dass es vollständig aufgebraucht ist, wenn die lineare Zahnkette 15 in seine geschlossene Zylinderform gebogen wird.

**In** der zweiten Ausführungsform nach Figur 11 ist eine derartige Flexibilität in Umfangsrichtung nur in dem dargestellten linear verlaufenden Bereich des Statorblechpaketes gegeben. Dieser Bereich schließt sich an einen bereits zu einem Halbkreisbogen ausgebildeten starren Abschnitt des Statorkörpers an.

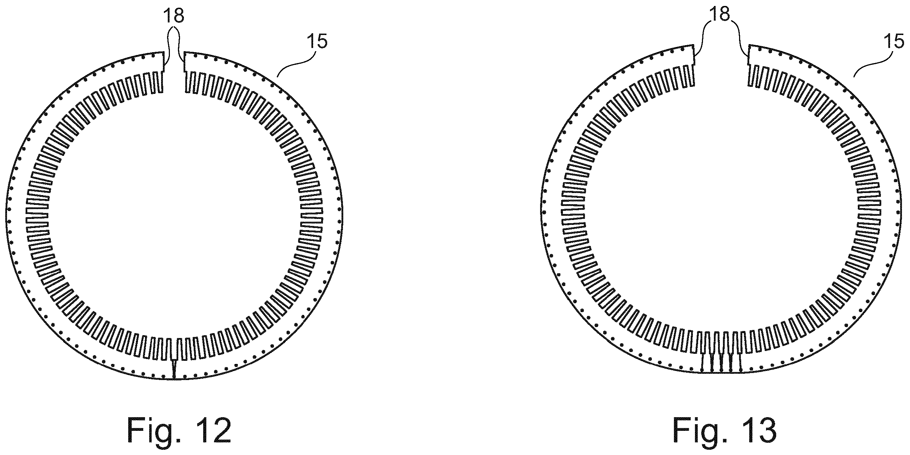

**In** der dritten Ausführungsform nach Figur 12 sind hingegen zwei im Querschnitt halbkreisförmige, starre Statorkörperhälften an einer Stelle, die gegenüber der Fügestelle mit den beiden Stirnflächen 18 angeordnet ist, gelenkig miteinander verbunden.

**In** der vierten Ausführungsform nach Figur 13 wird diese Gelenkstelle durch einen Bereich von vier gelenkigen Statorzähnen 17 gegenüber der Fügestelle verwirklicht.

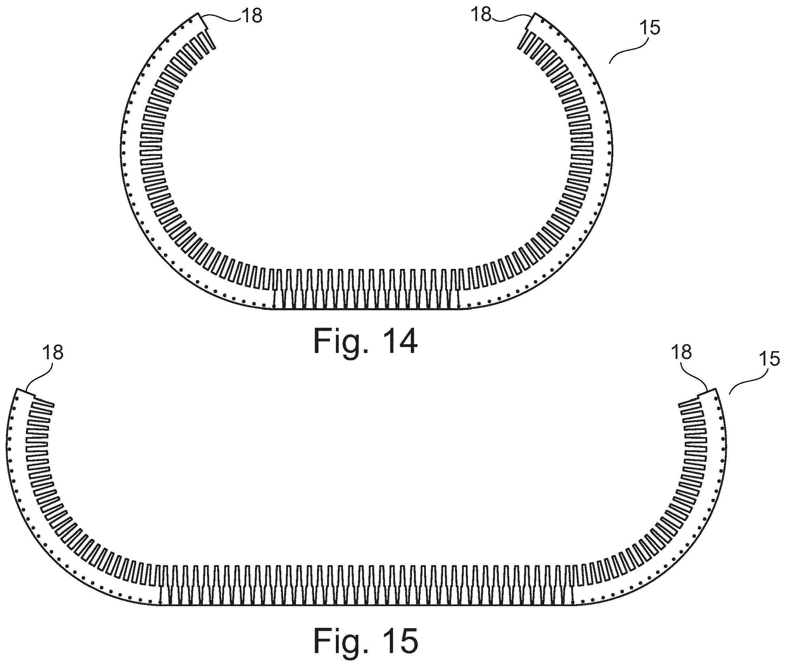

**In** der fünften und sechsten Ausführungsform (Figuren 14 und 15) wird der Bereich mit den gelenkig ausgebildeten Statorzähnen 17 ausgehend von Figur 13 zu Lasten der Ausdehnung der starren, bogenförmigen Statorbereiche vergrößert.

### Bezugszeichenliste

- 1: Stator
- 2: Statorkörper
- 3: Wicklungsmatte
- 4, 5,13: erste Sätze
- 6: Wellenwicklungsleiter
- 7: Nutabschnitte
- 8: Kopfabschnitte
- 9: Symmetrieachse
- 10: Wickelkopfspitze
- 11: erste Teilwicklungsmatte
- 12: zweite Teilwicklungsmatte
- 13: Wicklungsstapel
- 14: Anschlussleiter
- 15: Zahnkette
- 16: Statornuten
- 17: Statorzähne
- 18: Stirnfläche

## Patentansprüche

1. Stator (1) einer dynamoelektrischen Maschine mit einem Statorkörper (2) mit Statornuten (16) und mindestens einer als Wellenwicklung ausgebildeten Wicklungsmatte (3) mit in den Statornuten (16) angeordneten, in unterschiedlichen Radialpositionen übereinanderliegenden Nutabschnitten (7) und die Nutabschnitte verbindenden Kopfabschnitten (8), wobei
• jeder Wellenwicklungsleiter (6) in der Mitte seiner Ausdehnung in Wickelrichtung einen Lagenwechsel um genau eine Radialposition in den Statornuten (16) vollzieht und
• die Wicklungsmatte eine erste Teilwicklungsmatte (11) umfasst, die für jeden Strang genau einen ersten Satz (4,5,13) von Wellenwicklungsleitern (6) umfasst, wobei besagte erste Sätze (4,5,13) im Bereich des Lagenwechsels X-förmig ineinandergefügt sind, so dass an Kreuzungspunkten der Wellenwicklungsleiter (6) eines ersten und zweiten Stranges auf der einen Seite des Lagenwechsels stets die Wellenwicklungsleiter (6) des ersten Stranges über denen des zweiten Stranges liegen und auf der anderen Seite stets die Wellenwicklungsleiter (6) des zweiten Stranges über denen des ersten Stranges liegen.

2. Stator (1) nach Anspruch 1, wobei jeder Satz (4,5,13) eine Anzahl q durchgängiger Wellenwicklungsleiter (6) aufweist, deren Nutabschnitte (7) auf jeweils einen Nutblock von q nebeneinander liegenden Statornuten (16) pro Pol verteilt sind.

3. Stator (1) nach Anspruch 2, wobei die Reihenfolge der Nutabschnitte (7) der verschiedenen Wellenwicklungsleiter (6) eines Satzes zwischen den Nutblöcken derart vertauscht ist, dass jeder Wicklungsleiter (6) jede der q möglichen umfangsseitigen Positionen in einem Nutblock gleich oft einnimmt.

4. Stator (1) nach einem der Ansprüche 2 oder 3, wobei die Polpaarzahl p des Stators ein ganzzahliges Vielfaches von q beträgt.

5. Stator (1) nach einem der vorhergehenden Ansprüche mit einer zweiten Teilwicklungsmatte (12), die für jeden Strang genau einen zweiten Satz von Wellenwicklungsleitern umfasst, wobei besagte zweite Sätze im Bereich des Lagenwechsels X-förmig ineinandergefügt sind, so dass an Kreuzungspunkten der Wellenwicklungsleiter (6) eines ersten und zweiten Stranges auf der einen Seite des Lagenwechsels stets die Wellenwicklungsleiter (6) des ersten Stranges über denen des zweiten Stranges liegen und auf der anderen Seite stets die Wellenwicklungsleiter (6) des zweiten Stranges über denen des ersten Stranges liegen.

6. Stator (1) nach Anspruch 5, wobei die zweite Teilwicklungsmatte (12) gegenüber der ersten Teilwicklungsmatte (11) in einem linear abgerollten Zustand um 180 Grad um eine in Wickelrichtung ausgerichtete Achse gedreht ist und wobei die Teilwicklungsmatten (11,12) X-förmig im Bereich des Lagenwechsels ineinandergefügt sind, so dass die Wellenwicklungsleiter (6) der ersten Teilwicklungsmatte (11) auf der einen Seite des Lagenwechsels stets über den Wellenwicklungseiter (6) der zweiten Teilwicklungsmatte (12) liegen und auf der anderen Seite des Lagenwechsels stets unterhalb der Wellenwicklungsleiter (6) der zweiten Teilwicklungsmatte (12) liegen.

7. Stator (1) nach einem der vorhergehenden Ansprüche, wobei die Ausdehnung der Wicklungsmatte in Wickelrichtung dem Innenumfang des Stators entspricht.

8. Stator (1) nach einem der vorstehenden Ansprüche, wobei die Wellenwicklungsleiter (6) eines Satzes (4,5,13) in einem linear ausgebreiteten Zustand eine Achsensymmetrie bezüglich eines Kreuzungsschemas der Kopfanschnitte (8) aufweisen mit einer Symmetrieachse (9), die parallel zu einem Nutabschnitt ausgerichtet ist.

9. Stator (1) nach einem der vorstehenden Ansprüche, wobei zumindest Bereiche der Kopfabschnitte (8) jedes Wellenwicklungsleiters (6) auf der einen Seite jenseits des Lagenwechsels in Richtung der Nutöffnung gegenüber den jeweils verbundenen Nutabschnitten (7) versetzt verlaufen und auf der anderen Seite jenseits des Lagenwechsels in Richtung des Nutgrundes gegenüber den jeweils verbundenen Nutabschnitten (7) versetzt verlaufen.

10. Stator (1) nach Anspruch 9, wobei der maximale Versatz der Kopfabschnitte (8) jeweils dem Betrage nach einer halben Radialposition entspricht.

11. Stator (1) nach einem der vorstehenden Ansprüche, wobei der Statorkörper (2) eine zu einer Zylinderform gebogene Zahnkette (15) aufweist mit mindestens einer axial verlaufende Fügestelle, an der die Enden der gebogenen Zahnkette miteinander verbunden sind.

12. Dynamoelektrische Maschine mit einem Stator (1) nach einem der vorstehenden Ansprüche.

13. Verfahren zur Herstellung einer Wicklungsmatte (3) für einen Stators (1) einer dynamoelektrischen Maschine, bei dem eine erste Teilwicklungsmatte (11) durch folgende Verfahrensschritte erzeugt wird:
• Bereitstellen eines ersten Satzes (4,5,13) von q Wellenwicklungsleitern (6) für jeden Strang des Stators (1), wobei die Wellenwicklungsleiter (6) jeweils Nutabschnitte (7) und die Nutabschnitte (7) verbindenden Kopfabschnitte (8) aufweisen, wobei jeder Wellenwicklungsleiter (6) in der Mitte seiner Ausdehnung in Wickelrichtung einen Lagenwechsel um genau eine Radialposition in den Statornuten (16) vollzieht,
• Anordnen der q Wellenwicklungsleiter (6) derart, dass die Nutabschnitte (7) der jeweiligen Wellenwicklungsleiter (6) im Abstand zweier Statornuten (16) aufeinander folgen und
• X-förmiges Ineinanderfügen aller ersten Sätze (4,5,13) zur ersten Teilwicklungsmatte (11), derart, dass die Wellenwicklungsleiter (6) im Bereich der Mitte ihrer Ausdehnung in Wickelrichtung betrachtet einen Lagenwechsel vollziehen, so dass an Kreuzungspunkten der Wellenwicklungsleiter (6) eines ersten und zweiten Stranges auf der einen Seite des Lagenwechsels stets die Wellenwicklungsleiter (6) des ersten Stranges über denen des zweiten Stranges liegen und auf der anderen Seite stets die Wellenwicklungsleiter (6) des zweiten Stranges über denen des ersten Stranges liegen.

14. Verfahren nach Anspruch 13 mit folgenden weiteren Verfahrensschritten:
• Erzeugen einer zweiten Teilwicklungsmatte (12) in gleicher Weise wie die erste Teilwicklungsmatte (11),
• Ineinanderfügen der Teilwicklungsmatten (11,12), wobei die Wellenwicklungsleiter (6) der ersten Teilwicklungsmatte (11) vor dem Lagenwechsel unter und hinter dem Lagenwechsel über den Wellenwicklungsleitern der zweiten Teilwicklungsmatte (12) angeordnet sind.

15. Verfahren nach Anspruch 14, wobei die zweite Teilwicklungsmatte (12) gegenüber der ersten Teilwicklungsmatte (11) um 180 Grad um eine in Wickelrichtung ausgerichtete Achse gedreht wird und wobei die Teilwicklungsmatten (11,12) X-förmig im Bereich des Lagenwechsels ineinandergefügt werden.

16. Verfahren nach einem der Ansprüche 13 bis 15, wobei die Reihenfolge der Nutabschnitte (7) der verschiedenen Wellenwicklungsleiter (6) des jeweiligen Satzes zwischen den Kopfabschnitten (8) derart vertauscht wird, dass jeder Wicklungsleiter (6) jede der q möglichen Positionen gleich oft einnimmt.

17. Verfahren nach Anspruch 16, wobei der Statorkörper (2) als linear ausgedehnte Zahnkette gefertigt wird, die nach einer Bestückung mit der Wicklungsmatte (3) in eine Zylinderform gebogen wird.

18. Verfahren nach einem der Ansprüche 13 bis 17, wobei die Ausdehnung der Wicklungsmatte (3) in Wickelrichtung dem Innenumfang des Stators (1) entspricht.

19. Verfahren nach einem der Ansprüche 13 bis 18, wobei die Wellenwicklungsleiter (6) eines Satzes (4,5,13) derart im Verhältnis zueinander angeordnet werden, dass sie eine Achsensymmetrie bezüglich eines Kreuzungsschemas der Kopfanschnitte (8) aufweisen mit einer Symmetrieachse (9), die parallel zu einem Nutabschnitt ausgerichtet ist.

20. Verfahren nach einem der Ansprüche 13 bis 19, wobei zumindest ein Bereich der Kopfabschnitte (8) jedes Wellenwicklungsleiters (6) auf der einen Seite jenseits des Lagenwechsels in Richtung der Nutöffnung gegenüber den jeweils verbundenen Nutabschnitten (7) versetzt wird und auf der anderen Seite jenseits des Lagenwechsels in Richtung des Nutgrundes gegenüber den jeweils verbundenen Nutabschnitten (7) versetzt wird, wobei insbesondere der Versatz jeweils dem Betrage nach der halben Ausdehnung der Nutabschnitte in radialer Richtung der Statornuten entspricht.

## Claims

1. A stator (1) of a dynamoelectric machine having a stator body (2) with stator slots (16) and at least one winding mat (3) designed as a wave winding with slot sections (7) arranged in the stator slots (16) in different radial positions one above the other and head sections (8) connecting the slot sections, wherein
• each wave winding conductor (6) undergoes a layer change by exactly one radial position in the stator slots (16) at the midpoint of its extension in the winding direction and
• the winding mat comprises a first partial winding mat (11) that comprises exactly one first set (4, 5, 13) of wave winding conductors (6) for each strand, wherein said first sets (4, 5, 13) are interlocked in an X-shape in the region of the layer change, such that, at the intersection points of the wave winding conductors (6) of a first and second strand, the wave winding conductors (6) of the first strand always lie above those of the second strand on one side of the layer change, and the wave winding conductors (6) of the second strand always lie above those of the first strand on the other side.

2. The stator (1) according to claim 1, wherein each set (4, 5, 13) has a number q of continuous wave winding conductors (6), the slot sections (7) of which are distributed over one slot block each of q adjacent stator slots (16) per pole.

3. The stator (1) according to claim 2, wherein the sequence of the slot sections (7) of the different wave winding conductors (6) of a set is interchanged between the slot blocks, such that each winding conductor (6) occupies each of the q possible circumferential positions in a slot block equally often.

4. The stator (1) according to either one of claims 2 or 3, wherein the number of pole pairs p of the stator is an integer multiple of q.

5. The stator (1) according to any one of the preceding claims having a second partial winding mat (12) comprising exactly one second set of wave winding conductors for each strand, wherein said second sets are interlocked in an X-shape in the region of the layer change, such that, at the intersection points of the wave winding conductors (6) of a first and second strand, the wave winding conductors (6) of the first strand always lie above those of the second strand on one side of the layer change, and the wave winding conductors (6) of the second strand always lie above those of the first strand on the other side.

6. The stator (1) according to claim 5, wherein the second partial winding mat (12) is rotated 180 degrees about an axis aligned in the winding direction relative to the first partial winding mat (11) in a linearly unwound state and wherein the partial winding mats (11, 12) are interlocked in an X-shape in the region of the layer change, such that the wave winding conductors (6) of the first partial winding mat (11) are always above the wave winding conductor (6) of the second partial winding mat (12) on one side of the layer change and are always below the wave winding conductor (6) of the second partial winding mat (12) on the other side of the layer change.

7. The stator (1) according to any one of the preceding claims, wherein the extension of the winding mat in the winding direction corresponds to the inner circumference of the stator.

8. The stator (1) according to any one of the preceding claims, wherein the wave winding conductors (6) of a set (4, 5, 13), when arranged in a linearly unfolded state, exhibit axial symmetry with respect to a crossing scheme of the head sections (8), the axis of symmetry (9) extending parallel to a slot section.

9. The stator (1) according to any one of the preceding claims, wherein at least regions of the end sections (8) of each wave winding conductor (6) are offset relative to the respective connected slot sections (7) on one side beyond the layer change in the direction of the slot opening and are offset relative to the respective connected slot sections (7) on the other side beyond the layer change in the direction of the slot base.

10. The stator (1) according to claim 9, wherein the maximum offset of the head sections (8) is equal in absolute magnitude to the amount of one-half of a radial position.

11. The stator (1) according to any one of the preceding claims, wherein the stator body (2) has a toothed chain (15) bent into a cylindrical shape having at least one axially extending joining point, at which the ends of the bent toothed chain are connected to one another.

12. A dynamoelectric machine having a stator (1) according to any one of the preceding claims.

13. A method for producing a winding mat (3) for a stator (1) of a dynamoelectric machine, in which a first partial winding mat (11) is produced by the following method steps:
• providing a first set (4, 5, 13) of q wave winding conductors (6) for each strand of the stator (1), wherein the wave winding conductors (6) each comprise slot sections (7) and head sections (8) connecting the slot sections (7), wherein each wave winding conductor (6) undergoes a layer change by exactly one radial position in the stator slots (16) at the midpoint of its extension in the winding direction,
• arranging the q wave winding conductors (6) such that the slot sections (7) of the respective wave winding conductors (6) follow one another at a distance of two stator slots (16) and
• X-shaped interlocking of all first sets (4, 5, 13) to form the first partial winding mat (11), such that the wave winding conductors (6) undergo a layer change in the region of the midpoint of their extension, viewed in the winding direction, such that, at the intersection points of the wave winding conductors (6) of a first and second strand, the wave winding conductors (6) of the first strand always lie above those of the second strand on one side of the layer change, and the wave winding conductors (6) of the second strand always lie above those of the first strand on the other side.

14. The method according to claim 13 having the following further method steps:
• producing a second partial winding mat (12) in the same way as the first partial winding mat (11),
• interlocking the partial winding mats (11, 12), wherein the wave winding conductors (6) of the first partial winding mat (11) are arranged below the wave winding conductors of the second partial winding mat (12) before the layer change and above the wave winding conductors after the layer change.

15. The method according to claim 14, wherein the second partial winding mat (12) is rotated 180 degrees about an axis aligned in the winding direction relative to the first partial winding mat (11) and wherein the partial winding mats (11, 12) are interlocked in an X-shape in the region of the layer change.

16. The method according to any one of claims 13 to 15, wherein the sequence of the slot sections (7) of the different wave winding conductors (6) of the respective set is interchanged between the head sections (8), such that each winding conductor (6) occupies each of the q possible positions equally often.

17. The method according to claim 16, wherein the stator body (2) is produced as a linearly extended toothed chain which is bent into a cylindrical shape after being fitted with the winding mat (3).

18. The method according to any one of claims 13 to 17, wherein the extension of the winding mat (3) in the winding direction corresponds to the inner circumference of the stator (1).

19. The method according to any one of claims 13 to 18, wherein the wave winding conductors (6) of a set (4, 5, 13) are arranged relative to one another, such that they exhibit axial symmetry with respect to a crossing scheme of the head sections (8), the axis of symmetry (9) extending parallel to a slot section.

20. The method according to any one of claims 13 to 19, wherein at least one region of the end sections (8) of each wave winding conductor (6) is offset on one side beyond the layer change in the direction of the slot opening relative to the respective connected slot sections (7) and is offset on the other side beyond the layer change in the direction of the slot bottom relative to the respective connected slot sections (7), wherein, in particular, the offset corresponds in magnitude to one-half of the radial extent of the slot sections in the radial direction of the stator slots.

## Revendications

1. Stator (1) d'une machine dynamoélectrique comportant un corps de stator (2) comportant des encoches de stator (16) et au moins un tapis d'enroulement (3) conçu comme un enroulement ondulé comportant des sections d'encoche (7) disposées dans les encoches de stator (16) à différentes positions radiales les unes au-dessus des autres et des sections de tête (8) reliant les sections d'encoche, dans lequel
• chaque conducteur d'enroulement ondulé (6) effectue un changement de couche d'exactement une position radiale dans les encoches de stator (16) au milieu de son extension dans le sens d'enroulement et
• le tapis d'enroulement comprend un premier tapis d'enroulement partiel (11) qui, pour chaque brin, comprend exactement un premier ensemble (4, 5, 13) de conducteurs d'enroulement ondulé (6), dans lequel lesdits premiers ensembles (4, 5, 13) sont imbriqués en forme de X dans une zone du changement de couche, de sorte qu'au niveau de points d'intersection des conducteurs d'enroulement ondulé (6) d'un premier et d'un second brin d'un côté du changement de couche, les conducteurs d'enroulement ondulé (6) du premier brin se trouvent toujours au-dessus de ceux du second brin et de l'autre côté, les conducteurs d'enroulement ondulé (6) du second brin se trouvent toujours au-dessus de ceux du premier brin.

2. Stator (1) selon la revendication 1, dans lequel chaque ensemble (4, 5, 13) comporte un nombre q de conducteurs d'enroulement ondulé (6) continus dont les sections d'encoche (7) sont réparties sur respectivement un bloc d'encoches de q encoches de stator (16) adjacentes par pôle.

3. Stator (1) selon la revendication 2, dans lequel la séquence des sections d'encoche (7) des différents conducteurs d'enroulement ondulé (6) d'un ensemble est permutée entre les blocs d'encoche de sorte que chaque conducteur d'enroulement (6) occupe chacune des q positions circonférentielles possibles dans un bloc d'encoche le même nombre de fois.

4. Stator (1) selon l'une des revendications 2 ou 3, dans lequel le nombre de paires de pôles p du stator est un multiple entier de q.

5. Stator (1) selon l'une des revendications précédentes comportant un second tapis d'enroulement partiel (12) qui comprend exactement un second ensemble de conducteurs d'enroulement ondulé pour chaque brin, dans lequel lesdits seconds ensembles sont imbriqués en forme de X dans une zone du changement de couche, de sorte qu'au niveau de points d'intersection des conducteurs d'enroulement ondulé (6) d'un premier et d'un second brin d'un côté du changement de couche, les conducteurs d'enroulement ondulé (6) du premier brin se trouvent toujours au-dessus de ceux du second brin et de l'autre côté, les conducteurs d'enroulement ondulé (6) du second brin se trouvent toujours au-dessus de ceux du premier brin.

6. Stator (1) selon la revendication 5, dans lequel le second tapis d'enroulement partiel (12) est tourné de 180 degrés autour d'un axe aligné dans le sens d'enroulement par rapport au premier tapis d'enroulement partiel (11) dans un état linéairement déroulé et dans lequel les tapis d'enroulement partiels (11, 12) sont imbriqués ensemble en forme de X dans une zone du changement de couche, de sorte que les conducteurs d'enroulement ondulé (6) du premier tapis d'enroulement partiel (11) se trouvent toujours au-dessus du conducteur d'enroulement ondulé (6) du second tapis d'enroulement partiel (12) d'un côté du changement de couche et se trouvent toujours au-dessous du conducteur d'enroulement ondulé (6) du second tapis d'enroulement partiel (12) de l'autre côté du changement de couche.

7. Stator (1) selon l'une des revendications précédentes, dans lequel l'étendue du tapis d'enroulement dans le sens d'enroulement correspond à la circonférence intérieure du stator.

8. Stator (1) selon l'une des revendications précédentes, dans lequel les conducteurs d'enroulement ondulé (6) d'un ensemble (4, 5, 13) dans un état déployé linéairement présentent une symétrie axiale par rapport à un schéma d'intersection des sections de tête (8) avec un axe de symétrie (9) qui est aligné parallèlement à une section d'encoche.

9. Stator (1) selon l'une des revendications précédentes, dans lequel au moins des zones des sections de tête (8) de chaque conducteur d'enroulement ondulé (6) s'étendent de manière décalée d'un côté au-delà du changement de couche vers l'ouverture d'encoche par rapport aux sections d'encoche (7) respectivement reliées et s'étendent de manière décalée de l'autre côté au-delà du changement de couche vers le fond d'encoche par rapport aux sections d'encoche (7) respectivement reliées.

10. Stator (1) selon la revendication 9, dans lequel le décalage maximal des sections de tête (8) correspond respectivement à la moitié d'une position radiale.

11. Stator (1) selon l'une des revendications précédentes, dans lequel le corps de stator (2) présente une chaîne dentée (15) pliée en forme de cylindre comportant au moins un point de jonction s'étendant axialement au niveau duquel les extrémités de la chaîne dentée pliée sont reliées entre elles.

12. Machine dynamoélectrique comportant un stator (1) selon l'une des revendications précédentes.

13. Procédé de fabrication d'un tapis d'enroulement (3) pour un stator (1) d'une machine dynamoélectrique, dans lequel un premier tapis d'enroulement partiel (11) est produit par les étapes de procédé suivantes :
• fournir un premier ensemble (4, 5, 13) de q conducteurs d'enroulement ondulé (6) pour chaque brin du stator (1), dans lequel les conducteurs d'enroulement ondulé (6) présentent respectivement des sections d'encoche (7) et des sections de tête (8) reliant les sections d'encoche (7), dans lequel chaque conducteur d'enroulement ondulé (6) effectue un changement de couche d'exactement une position radiale dans les encoches de stator (16) au milieu de son extension dans le sens d'enroulement,
• disposer les q conducteurs d'enroulement ondulé (6) de telle sorte que les sections d'encoche (7) de conducteurs d'enroulement ondulé (6) respectifs se suivent à une distance de deux encoches de stator (16) et
• imbriquer en forme de X tous les premiers ensembles (4, 5, 13) pour former le premier tapis d'enroulement partiel (11), de sorte que les conducteurs d'enroulement ondulé (6) dans une zone du milieu de leur extension, vus dans le sens d'enroulement, effectue un changement de couche, de sorte qu'au niveau de points d'intersection des conducteurs d'enroulement ondulé (6) d'un premier et d'un second brin, d'un côté du changement de couche, les conducteurs d'enroulement ondulé (6) du premier brin se trouvent toujours au-dessus de ceux du second brin et de l'autre côté, les conducteurs d'enroulement ondulé (6) du second brin se trouvent toujours au-dessus de ceux du premier brin.

14. Procédé selon la revendication 13 comportant les étapes de procédé supplémentaires suivantes :
• produire un second tapis d'enroulement partiel (12) de la même manière que le premier tapis d'enroulement partiel (11),
• imbriquer les tapis d'enroulement partiel (11, 12), dans lequel les conducteurs d'enroulement ondulé (6) du premier tapis d'enroulement partiel (11) sont disposés au-dessous des conducteurs d'enroulement ondulé du second tapis d'enroulement partiel (12) avant le changement de couche et au-dessus des conducteurs d'enroulement ondulé après le changement de couche.

15. Procédé selon la revendication 14, dans lequel le second tapis d'enroulement partiel (12) est tourné de 180 degrés autour d'un axe aligné dans le sens d'enroulement par rapport au premier tapis d'enroulement partiel (11), et dans lequel les tapis d'enroulement partiels (11, 12) sont imbriqués ensemble en forme de X dans une zone du changement de couche.

16. Procédé selon l'une des revendications 13 à 15, dans lequel la séquence des sections d'encoche (7) des différents conducteurs d'enroulement ondulé (6) de l'ensemble respectif est permutée entre les sections de tête (8) de sorte que chaque conducteur d'enroulement (6) occupe chacune des q positions possibles le même nombre de fois.

17. Procédé selon la revendication 16, dans lequel le corps de stator (2) est fabriqué sous forme de chaîne dentée étendue linéairement qui est pliée en forme de cylindre après avoir été équipée du tapis d'enroulement (3).

18. Procédé selon l'une des revendications 13 à 17, dans lequel l'étendue du tapis d'enroulement (3) dans le sens d'enroulement correspond à la circonférence intérieure du stator (1).

19. Procédé selon l'une des revendications 13 à 18, dans lequel les conducteurs d'enroulement ondulé (6) d'un ensemble (4, 5, 13) sont disposés les uns par rapport aux autres de manière à présenter une symétrie axiale par rapport à un schéma d'intersection des sections de tête (8) avec un axe de symétrie (9) qui est aligné parallèlement à une section d'encoche.

20. Procédé selon l'une des revendications 13 à 19, dans lequel au moins une zone des sections de tête (8) de chaque conducteur d'enroulement ondulé (6) est décalée d'un côté au-delà du changement de couche vers l'ouverture d'encoche par rapport aux sections d'encoche (7) respectivement reliées et de l'autre côté est décalée au-delà du changement de couche vers le fond d'encoche par rapport aux sections d'encoche (7) respectivement reliées, dans lequel en particulier le décalage correspond respectivement à la moitié de l'étendue des sections d'encoche dans la direction radiale des encoches de stator.
